# FASCICULE DE BREVET EUROPEEN

(11) **EP 4 551 888 B1**
(45) Date de publication et mention de la délivrance du brevet: **12.08.2026**
(21) Numéro de dépôt: 23738000.1
(22) Date de dépôt: 03.07.2023
(51) Int. Cl.: F28D 9/00, F28F 3/02, F28F 3/06, F28D 21/00

(54) **DISPOSITIF DE REGULATION THERMIQUE, NOTAMMENT DE REFROIDISSEMENT**
VORRICHTUNG ZUR THERMISCHEN REGELUNG, INSBESONDERE ZUR KÜHLUNG
DEVICE FOR THERMAL REGULATION, IN PARTICULAR FOR COOLING

(30) Priorité: 07.07.2022 FR 2206955
(43) Date de publication de la demande: 14.05.2025
(73) Titulaire: Valeo Electrification, 95892 Cergy Pontoise (FR)
(72) Inventeur: DE-VAULX, Cedric, 78322 Le Mesnil-Saint-Denis Cedex (FR); AZZOUZ, Kamel, 78322 Le Mesnil-Saint-Denis Cedex (FR); ETIENNE, Erwan, 78322 Le Mesnil-Saint-Denis Cedex (FR); LHERMITTE, Jean-Christophe, 78322 Le Mesnil-Saint-Denis Cedex (FR); BLANDIN, Jeremy, 78322 Le Mesnil-Saint-Denis Cedex (FR)
(74) Mandataire: Valeo Powertrain Systems
(86) Numéro de dépôt international: PCT/EP2023/068234
(87) Numéro de publication internationale: WO 2024/008644

(56) Documents cités:
- WO-A1-2013/080611
- DE-U1- 202019 102 480
- US-A1- 2020 025 452
- US-A1- 2022 120 518

## Description

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule, par exemple un véhicule automobile.

Le véhicule peut être de type terrestre, maritime ou aérien.

L'invention concerne notamment des échangeurs thermiques à plaques destinés à la circulation d'un fluide caloporteur, par exemple un fluide réfrigérant ou une eau glycolée, permettant le refroidissement des batteries de véhicules hybrides ou électriques. La première plaque, ou plaque supérieure, qui vient au contact des composants à refroidir, est généralement plane. La seconde plaque, ou plaque inférieure, est une plaque emboutie dans laquelle sont formés des canaux de circulation pour le fluide caloporteur.

De manière connue, pour augmenter les turbulences dans le fluide caloporteur, qui ont pour effet d'augmenter le coefficient d'échange et donc la performance thermique, deux types d'éléments peuvent être utilisés.

Il y a d'abord des éléments appelés « *hard dimples »* en anglais, qui sont des bossages réalisant la liaison entre la plaque inférieure et la plaque supérieure. Ces bossages assurent la liaison mécanique de l'ensemble, tout assurant un niveau minimum de perturbation du liquide de refroidissement. Ces bossages sont robustes d'un point de vue mécanique, mais la performance thermique n'est pas optimisée. En effet, en traversant les canaux de circulation sur toute leur hauteur, les bossages produisent d'importantes pertes de charge sans pour autant créer suffisamment de turbulences pour que l'augmentation de la performance thermique ne compense cette perte de charge.

Il y a encore des éléments appelés « soft *dimples »* en anglais, qui sont des bossages à l'intérieur des canaux de circulation, mais de hauteur plus faible de sorte à être en retrait de la plaque supérieure. Ces bossages ne participent pas à la tenue mécanique des plaques de refroidissement mais assure un niveau important de turbulence dans le fluide. La demande de brevet DE102014202161 décrit de tels bossages. US-A-2022120518 divulgue un autre dispositif de régulation thermique comportant un réseau de circulation pour un caloporteur de fluide comprenant un canal d'écoulement de fluide et un organe de mélange.

L'invention vise à améliorer l'homogénéité en température du fluide caloporteur circulant dans le réseau de circulation.

L'invention propose ainsi un dispositif de régulation selon la revendication 1.

Dans le réseau de circulation de fluide caloporteur, une couche pariétale de fluide, qui est sur ou à proximité d'une paroi d'échange thermique, est davantage chauffée qu'une couche interne, qui est plus éloignée de cette paroi. La couche interne et la couche pariétale se prolongent l'une l'autre de manière plus ou moins continue en termes de température.

Dans l'invention, le mélange de fluide vise à atténuer, voire supprimer, ce gradient de température au sein du fluide. L'invention permet de mélanger efficacement des couches pariétales de fluide et des couches internes de fluide.

De préférence, le canal comprend au moins une paroi formée par une plaque ou un tube, et cette plaque ou ce tube, d'une part, et l'organe de mélange, d'autre part, sont des pièces distinctes.

Selon l'un des aspects de l'invention, la plaque ou le tube, et l'organe de mélange sont réalisés dans des matériaux différents.

Par exemple, l'organe de mélange est réalisé en matériau plastique ou matériau composite à base de plastique, et la plaque ou le tube est réalisé en métal, par exemple de l'aluminium ou de l'acier.

Selon l'un des aspects de l'invention, l'organe de mélange est sous la forme d'un organe additionnel placé dans le canal.

Selon l'un des aspects de l'invention, les ajours sont perpendiculaires au sens général d'écoulement du fluide dans le dispositif.

Selon l'invention, le canal et l'organe de mélange sont agencés pour définir au moins une zone de séparation (51), de préférence au moins deux zones de séparation, l'au moins une zone de séparation étant agencée pour séparer l'écoulement de fluide en au moins deux flux séparés et, en aval, une zone de mélange dans laquelle les deux flux séparés se mélangent.

Selon l'un des aspects de l'invention, les flux séparés présentent une portion parallèle avant de se rejoindre dans la zone de mélange.

Selon l'invention, les deux flux séparés débouchent dans la zone de mélange suivant des angles respectifs choisis de sorte à générer un mélange de couches pariétales de fluide et de couches internes de fluide dans la zone de mélange.

Selon l'un des aspects de l'invention, les flux séparés qui se recombinent dans la zone de mélange sont exactement au nombre de deux.

Selon l'invention, l'angle d'incidence entre les deux flux de fluide débouchant dans la zone de mélange est compris entre 45° et 90°, l'angle étant notamment défini par rapport à l'axe z, c'est à dire l'axe sécant de façon perpendiculaire les 2 plaques.

Les angles précités sont choisis de sorte que toutes les couches se mélangent. Un angle d'incidence trop faible entre les écoulements de fluide ne permet pas de mélanger efficacement les couches car ces flux seraient alors « trop tangents » l'un à l'autre.

L'invention permet ainsi d'homogénéiser la température du fluide sur toute la section transversale de l'écoulement, à savoir sur la paroi et au centre de l'écoulement. Le fluide peut ainsi présenter une température plus faible sur la paroi qui joue le rôle d'interface thermique de sorte à offrir un meilleur échange thermique avec le composant à refroidir.

Dans la présente invention, le mélange peut se faire à relativement faibles vitesses du fluide, mélange qui est de type chaotique grâce aux angles choisis pour les deux écoulements qui débouchent dans la zone de mélange. Le principe de mélange chaotique est notamment utilisé pour le mélange de fluides visqueux à faibles vitesses. De manière connue, le mélange chaotique est basé sur la "transformation du boulanger" pour le mélange des différentes couches de fluide. Par exemple, selon une manière de faire cette transformation, les couches de fluide subissent une division passive, puis une rotation dans des coudes de chiralités différentes, et enfin la recombinaison pour obtenir un étirement et un repliement pour assurer un mélange homogène.

Dans l'invention, le mélange n'est pas nécessairement turbulent si la vitesse, ou le nombre de Reynolds, ne dépasse pas un certain seuil. L'invention peut ainsi permettre un mélange à faible vitesse ou à faible nombre de Reynolds, typiquement à nombre de Reynolds Re inférieur à 2000, notamment compris entre 100 et 1 400. Ceci est particulièrement avantageux lorsque le dispositif de régulation thermique fonctionne avec des vitesses d'écoulement de fluide insuffisantes pour générer des écoulements turbulents.

L'invention permet de mélanger les couches de fluide sans générer des pertes de charges excessives, à la différence notamment de turbulences qui sont sources de grandes pertes de charge.

Selon l'un des aspects de l'invention, l'angle d'incidence entre les deux écoulements de fluide débouchant dans la zone de mélange est compris entre 45° et 90°, ou entre 70° et 90°. L'angle peut être égal à 90°.

Selon l'un des aspects de l'invention, le canal présente une longueur mesurée suivant le sens général d'écoulement du fluide caloporteur, et l'organe de mélange s'étend sur au moins 50% de la longueur du canal, notamment sur au moins 70% ou 80% ou 90% de la longueur du canal.

Selon l'un des aspects de l'invention, le canal s'étend entre une entrée et une sortie de fluide et l'organe de mélange s'étend de l'entrée de fluide vers la sortie de fluide.

Selon l'un des aspects de l'invention, l'organe de mélange et le canal sont configurés pour générer des flux de fluide qui sont dans au moins deux plans parallèles distants l'un de l'autre selon une hauteur.

Ainsi l'écoulement de fluide peut être subdivisé en flux distincts qui passent respectivement au-dessus de l'organe de mélange et en dessous de cet organe de mélange. Ces flux sont étagés dans le sens de la hauteur.

Selon l'un des aspects de l'invention, l'écoulement se fait ainsi localement dans une direction perpendiculaire aux plans parallèles précités.

Selon l'un des aspects de l'invention, le réseau de fluide présente ainsi une configuration en trois dimensions, avec des flux de fluide dans deux plans distincts et des flux qui joignent les deux plans.

Selon l'un des aspects de l'invention, l'écoulement peut être subdivisé et distribué dans un nombre de plans, ou niveaux, qui est supérieur à 2.

Selon l'un des aspects de l'invention, l'organe de mélange et le canal sont configurés pour définir une pluralité de motifs élémentaires formés chacun par une zone de séparation de fluide et la zone de mélange qui lui est associée.

Selon l'invention, les flux qui partent de la zone de séparation et qui se regroupent dans la zone de mélange sont conservés, dans ce sens qu'ils ne reçoivent pas de flux additionnels de fluide sur ce chemin entre la zone de séparation et la zone de mélange.

Selon l'un des aspects de l'invention, la somme des sections transversales des flux qui partent séparément de la zone de mélange est sensiblement égale à la section de la zone de mélange.

Selon l'un des aspects de l'invention, la distance entre les centres de deux motifs successifs correspond à la taille du motif, toutes ces dimensions étant mesurées suivant la même direction.

Ces motifs peuvent être plus éloignés les uns des autres. En effet, la recombinaison permet avantageusement un bien meilleur mélange que ce qui est fait classiquement dans l'art antérieur. Il en résulte qu'une telle recombinaison permet un mélange homogène en aval et permet d'espacer lesdits motifs.

Selon l'un des aspects de l'invention, les ajours de l'organe de mélange sont identiques et sont espacés les uns des autres de manière régulière.

Selon l'un des aspects de l'invention, l'étendue entre le premier ajour et le dernier ajour d'une rangée représente au moins 50%, voire au moins 80% ou 90%, de la dimension de l'organe de mélange, dimension mesurée parallèlement à cette rangée.

Ainsi les ajours occupent une grande surface de l'organe de mélange.

Selon l'un des aspects de l'invention, l'organe de mélange comprend au moins deux rangées parallèles, voire au moins trois rangées parallèles, d'ajours.

Selon l'un des aspects de l'invention, le nombre de rangées et le nombre de motifs dans chaque rangée peuvent être choisis en fonction des performances de refroidissement requises.

Selon l'un des aspects de l'invention, chaque ajour comprend une branche longitudinale à laquelle se raccordent deux branches transversales.

Il est possible d'adapter la section de passage pour limiter les problématiques de perte de charge excessive. Dans ce cas, il suffit d'élargir l'empreinte des motifs de l'organe de mélange.

Selon l'un des aspects de l'invention, l'organe de mélange présente un pourtour adapté à la forme du canal dans lequel il est placé.

Selon l'un des aspects de l'invention, l'organe de mélange présente un pourtour de forme polygonale, par exemple globalement rectangulaire.

Selon l'un des aspects de l'invention, l'organe de mélange présente un pourtour de forme allongée pour épouser la forme du canal.

Selon l'un des aspects de l'invention, chaque canal reçoit un organe de mélange qui est un organe additionnel placé dans le canal.

Selon l'un des aspects de l'invention, l'organe de mélange est réalisé en matière plastique, notamment par injection de matière plastique.

Selon l'un des aspects de l'invention, l'organe de mélange est une pièce monolithique, agencée pour orienter les flux de fluide.

Dans ce cas, les ajours de l'organe de mélange sont notamment configurés pour définir des tronçons cylindriques pour le passage de fluide.

Selon un autre des aspects de l'invention, l'organe de mélange comporte au moins deux feuilles assemblées, ces feuilles étant pourvues d'orifices de circulation qui forment ensemble les ajours de l'organe de mélange définissant des bifurcations et croisements de fluide.

Les deux feuilles peuvent remplacer l'organe de mélange monolithique précité.

Dans cet exemple, les chemins de séparation et de recombinaison de fluide sont formés principalement les deux feuilles.

Selon un aspect de l'invention, les feuilles sont collées entre elles.

En variante, les feuilles sont soudées entre elles au laser. Ceci est avantageux pour éviter un échauffement des feuilles lorsque celles-ci sont réalisées en un matériau composite à base de plastique chargé avec des éléments de renfort tels que des fibres de verre ou des fibres de carbone.

Selon un aspect de l'invention, l'organe de mélange est placé entre deux faces planes formant respectivement deux faces principales des canaux d'écoulement.

Selon un aspect de l'invention, ces faces planes appartiennent à des plaques supérieure et inférieure entre lesquelles est placé l'organe de mélange.

Dans cet exemple de réalisation de l'invention, c'est principalement l'organe de mélange qui impose l'orientation des flux de fluide, les plaques supérieure et inférieure jouant principalement le rôle d'enveloppe des canaux, sans rôle d'orientation du fluide pour la séparation et la recombinaison des flux.

Selon un aspect de l'invention, la plaque inférieure comprend des sillons formant avec la plaque supérieure qui est plane, les canaux, notamment parallèles.

Selon un aspect de l'invention, chaque canal reçoit un organe de mélange associé.

Selon un aspect de l'invention, les sillons de la plaque inférieure sont réalisés par emboutissage de la plaque.

Selon un autre des aspects de l'invention, l'organe de mélange, notamment en métal, est placé dans une cuve, et cet organe de mélange et cette cuve définissent ensemble les canaux d'écoulement de fluide.

Selon un aspect de l'invention, la cuve est formée par une plaque inférieure et fermée par une plaque supérieure, notamment plane, et l'organe de mélange s'appuie sur les deux plaques formant la cuve, notamment en recouvrant tout le fond plat de la cuve.

Dans cet exemple, la séparation entre les canaux voisins est faite par l'organe de mélange, et non par la plaque inférieure, qui est plane sur le fond.

L'invention permet ainsi de réaliser aisément les deux plaques inférieure et supérieure qui ne nécessitent pas de formes embouties complexes.

Selon un autre des aspects de l'invention, l'organe de mélange comporte au moins deux feuilles métalliques assemblées, ces feuilles étant pourvues d'orifices de circulation qui forment ensemble les ajours de l'organe de mélange.

Selon un aspect de l'invention, les ajours de l'organe de mélange définissent des bifurcations et croisements de fluide à l'aide de la présence de tronçons, notamment de tronçons cylindriques, formées par l'organe de mélange.

Dans cet exemple, les chemins de séparation et de recombinaison de fluide sont formés principalement les deux feuilles.

Selon un aspect de l'invention, les feuilles sont à base d'aluminium, notamment étant en alliage d'aluminium.

Selon un aspect de l'invention, ces feuilles sont assemblées avec les plaques inférieure et supérieure, notamment ces feuilles étant prises, sur leur bordure, entre ces plaques inférieure et supérieure.

Selon un aspect de l'invention, cette bordure de l'organe de mélange est alors brasée avec les plaques inférieure et supérieure.

L'invention permet, avec une étape de brasage, d'assembler les plaques et les feuilles toutes ensemble.

Selon un aspect de l'invention, le réseau de circulation de fluide comprend un tronçon d'écoulement de fluide (23) en aval de la zone de mélange, de sorte que le fluide s'écoulant dans ce tronçon d'écoulement de fluide soit de température relativement homogène du fait du mélange dans la zone de mélange, et ledit tronçon d'écoulement en aval présente notamment une section transversale pour le passage de fluide qui est plus grande, par exemple d'un facteur 2, que chacune des sections transversales des écoulements de fluide séparés.

Selon un aspect de l'invention, les écoulements séparés de fluide qui débouchent dans la zone de mélange sont agencés dans des plans différents (P1, P2).

En variante, ces feuilles peuvent être collées entre elles.

Selon un autre des aspects de l'invention, les canaux sont formés par l'assemblage d'une plaque emboutie et de l'organe de mélange, la plaque emboutie comprenant des formes pour définir avec des formes de l'organe de mélange, les canaux et des zones de séparation et de mélange de fluide.

Selon l'un des aspects de l'invention, la plaque emboutie est une paroi enveloppe des canaux, par exemple la plaque inférieure qui définit avec une plaque supérieure les canaux de fluide.

Selon un aspect de l'invention, l'organe de mélange comprend une feuille unique avec les ajours de circulation de fluide.

Les ajours de la feuille définissent avec les formes embouties de la plaque des bifurcations et croisements de fluide.

Ainsi, à la différence d'exemples de mise en œuvre de l'invention précédents, une seule feuille est ici utilisée.

Selon un aspect de l'invention, les formes embouties de la plaque forment des motifs qui se répètent en correspondance avec les ajours de l'organe de mélange.

Selon un aspect de l'invention, chaque forme emboutie comprend une branche longitudinale à laquelle se raccordent deux branches transversales.

Selon un aspect de l'invention, les formes embouties sont des cuvettes sur la plaque qui sont disposées selon cette configuration de branches.

Selon un aspect de l'invention, cette configuration de branches présente une symétrie miroir et décalé avec la configuration de branches des motifs sur l'organe de mélange, pour former les bifurcations et croisements de fluide.

Selon un aspect de l'invention, l'organe de mélange peut être à base de matière plastique, de matière composite, de céramique ou de métal.

L'invention concerne encore un ensemble comportant un composant susceptible de dégager de la chaleur lors de son fonctionnement, et un dispositif de régulation thermique tel que décrit plus haut, au contact duquel le composant est refroidi.

Selon l'un des aspects de l'invention, le fluide caloporteur est un fluide réfrigérant choisi parmi les fluides réfrigérants R134a, R1234yf ou R744. En variante, le fluide caloporteur est une eau glycolée.

D'autres caractéristiques et avantages de l'invention apparaitront plus clairement à la lecture de la description suivante, donnée à titre d'exemples illustratifs et non limitatifs, et des dessins annexés parmi lesquels :
- la [Figure 1] illustre, schématiquement et partiellement, un dispositif de régulation thermique ;
- la [Figure 2] illustre, schématiquement et partiellement, l'organe de mélange entre les plaques inférieure et supérieure d'un dispositif de régulation thermique selon un exemple de mise en œuvre de l'invention,
- la [Figure 3] illustre, schématiquement et partiellement, de manière isolée, l'organe de mélange de la [Figure 2],
- la [Figure 4] illustre, schématiquement et partiellement, le cheminement du fluide imposé par l'organe de mélange de la [Figure 3],
- la [Figure 5] illustre, schématiquement et partiellement, un organe de mélange selon un autre exemple de mise en œuvre de l'invention,
- la [Figure 6] illustre, schématiquement et partiellement, encore un autre exemple de mise en œuvre de l'invention,
- la [Figure 7] illustre, schématiquement et partiellement, un autre exemple de mise en œuvre de l'invention.

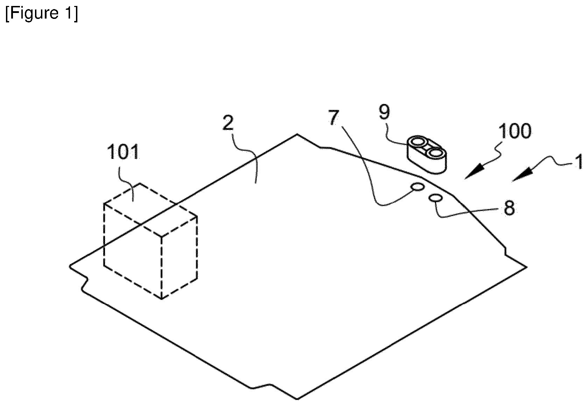

On a représenté sur la figure 1 un ensemble 100 comportant un ensemble de cellules de batterie 101 à refroidir, par exemple disposées suivant une pluralité de rangées parallèles, et un dispositif de régulation thermique 1 agencé pour refroidir les cellules 101, qui sont en contact thermique avec une plaque supérieure du dispositif de refroidissement 1, comme expliqué plus bas.

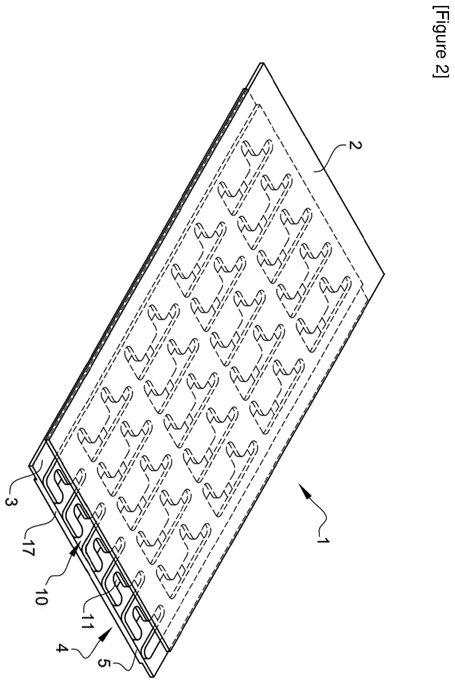

Le dispositif de régulation thermique 1 comporte une plaque supérieure 2 et une plaque inférieure 3 assemblée avec la plaque supérieure 2 pour former ensemble un réseau de circulation 4 formé d'une pluralité de canaux 5 de circulation pour un fluide caloporteur liquide, notamment une eau glycolée, comme mieux visible sur la figure 2.

Un seul canal 5 est représenté sur la figure 2. Les canaux 5 peuvent présenter différents cheminements de fluide, étant par exemple prévu avec un U.

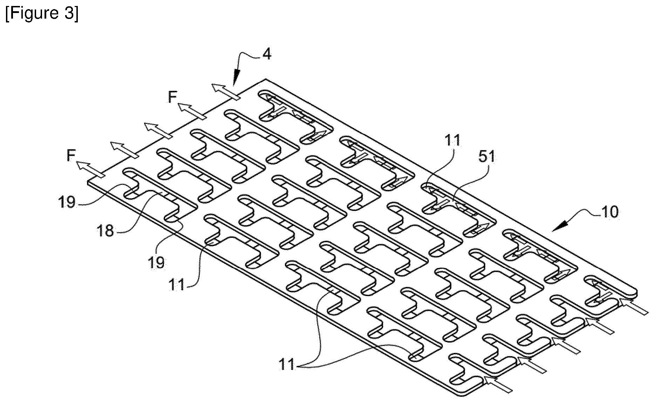

Le sens de circulation du fluide dans les canaux 5 est matérialisé par des flèches F sur la figure 3, comme cela sera expliqué plus en détails dans la suite.

Les canaux 5 sont alimentés en fluide, via une région de distribution de fluide, non représentée, qui communique avec une entrée de fluide 7. Est également prévue une sortie de fluide 8. Une bride 9 peut être connectée à cette entrée 7 et cette sortie 8 pour assurer des raccordements avec un circuit externe de fluide, qui comprend, entre autres, une pompe.

Le réseau de circulation 4 comprend, outre les canaux 5, un organe de mélange 10 placé dans chaque canal 5 et comprenant des ajours 11 agencés pour provoquer successivement la séparation et le mélange du fluide circulant dans le canal 5 associé.

Les canaux 5 sont formés entre la plaque inférieure 3 et la plaque supérieure 2.

L'organe de mélange 10 et les plaques 2 et 3 sont des pièces distinctes.

Dans l'exemple décrit, l'organe de mélange 10 est réalisé en matériau plastique ou matériau composite à base de plastique, et les plaques 2 et 3 sont réalisées en métal, par exemple de l'aluminium ou de l'acier.

L'organe de mélange 10 est sous la forme d'un organe additionnel placé dans le canal 5.

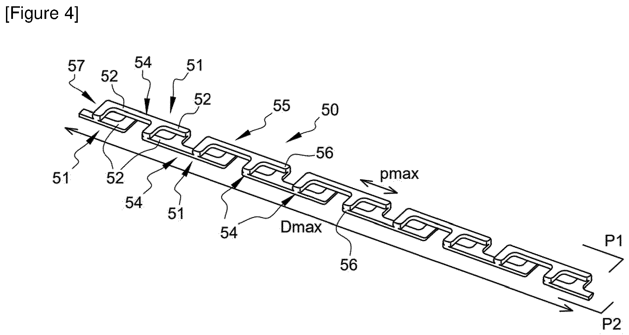

La figure 4 illustre le cheminement du fluide dans le réseau 4, cheminement imposé par l'organe de mélange 10.

Comme on peut le voir, le réseau de circulation de fluide 4 comprend des zones de séparation 51 successives qui se prolongent chacune vers deux tronçons 52 distincts dans lesquels l'écoulement se divise en deux flux. Ces tronçons 52 se rejoignent dans des zones de mélange 54 dans lesquelles les flux séparés se recombinent.

Chaque zone de séparation 51, puis les tronçons séparés 52 et la zone de mélange 54 forment un motif élémentaire 55. Le réseau de circulation de fluide 4 comprend une succession de tels motifs 55 régulièrement espacés, d'un pas prédéterminé.

Chaque motif 55 présente une dimension maximale pmax, ici mesurée dans la direction longitudinale, qui est au moins 20, 15, 10 ou 5 fois plus petite que la dimension maximale DMax du réseau de circulation de fluide 4, aussi mesurée dans la direction longitudinale.

Dans l'exemple décrit, certains écoulements séparés des tronçons 52 de fluide qui débouchent dans la zone de mélange 54 sont agencés dans deux plans différents P1 et P2.

Le réseau de circulation de fluide 4 génère des virages d'écoulement 56 passant d'un plan P1 ou P2 à l'autre.

Les plans P1 et P2, qui sont parallèles aux plaques 2 et 3, sont séparés d'une hauteur prédéterminée mesurée perpendiculairement à ces plans.

Le fluide caloporteur circule ainsi d'un plan P1 ou P2 à l'autre. A leur jonction ou recombinaison, les flux séparés se rencontrent suivant un angle permettant leur mélange, ici un angle sensiblement égal à 90°. Le réseau de circulation 4 utilise ainsi des directions d'écoulement dans les trois dimensions de l'espace, avec des flux de fluide dans les deux plans distincts P1 et P2 et des flux qui joignent les deux plans.

L'écoulement de fluide peut ainsi être subdivisé en flux distincts qui passent respectivement au-dessus de l'organe de mélange 10 et en dessous de cet organe de mélange 10.

Ainsi les deux flux séparés débouchent dans la zone de mélange 54 suivant des angles respectifs choisis de sorte à générer un mélange de couches pariétales de fluide et de couches internes de fluide dans la zone de mélange 54.

Le fluide peut ainsi présenter une température plus faible sur la paroi de la plaque supérieure 2 qui joue le rôle d'interface thermique de sorte à offrir un meilleur échange thermique avec les composants à refroidir.

Dans la présente invention, le mélange peut se faire à relativement faibles vitesses du fluide, mélange qui est de type chaotique grâce aux angles choisis pour les deux écoulements qui débouchent dans la zone de mélange.

Dans l'exemple décrit, l'organe de mélange 10 s'étend sensiblement sur toute la longueur du canal 5 associé.

Les ajours 11 de l'organe de mélange sont identiques et sont espacés les uns des autres de manière régulière.

L'étendue entre le premier ajour 11 et le dernier ajour 11 d'une rangée représente au moins 90% de la dimension de l'organe de mélange 10, dimension mesurée parallèlement à cette rangée.

Ainsi les ajours 11 occupent une grande surface de l'organe de mélange 10.

Dans l'exemple décrit, l'organe de mélange 10 comprend 5 rangées parallèles d'ajours 11.

Chaque ajour 11 comprend une branche longitudinale 18 à laquelle se raccordent deux branches transversales 19, comme on peut le voir sur la figure 3.

L'organe de mélange 10 présente un pourtour adapté à la forme du canal 5 dans lequel il est placé, qui est ici globalement rectangulaire.

Chaque canal 5 reçoit un organe de mélange 10 qui est un organe additionnel placé dans le canal.

Dans l'exemple décrit, l'organe de mélange 10 est une pièce monolithique, réalisée par injection, agencé pour orienter les flux de fluide.

Dans ce cas, les ajours 11 de l'organe de mélange 10 sont configurés pour définir des tronçons cylindriques 52 pour le passage de fluide.

Dans l'exemple décrit, l'organe de mélange 10 est placé dans une cuve 17, comme on peut le voir sur la figure 2, et cet organe de mélange 10 et cette cuve 17 définissent ensemble les canaux d'écoulement 5 de fluide.

La cuve 17 est formée par la plaque inférieure 3 et fermée par la plaque supérieure plane 2, et l'organe de mélange 10 s'appuie sur les deux plaques 2 et 3 formant la cuve 17, en recouvrant tout le fond plat de la cuve 17.

Dans cet exemple, la séparation entre les canaux 5 voisins est faite par l'organe de mélange 10, et non par la plaque inférieure 3, qui est plane sur le fond.

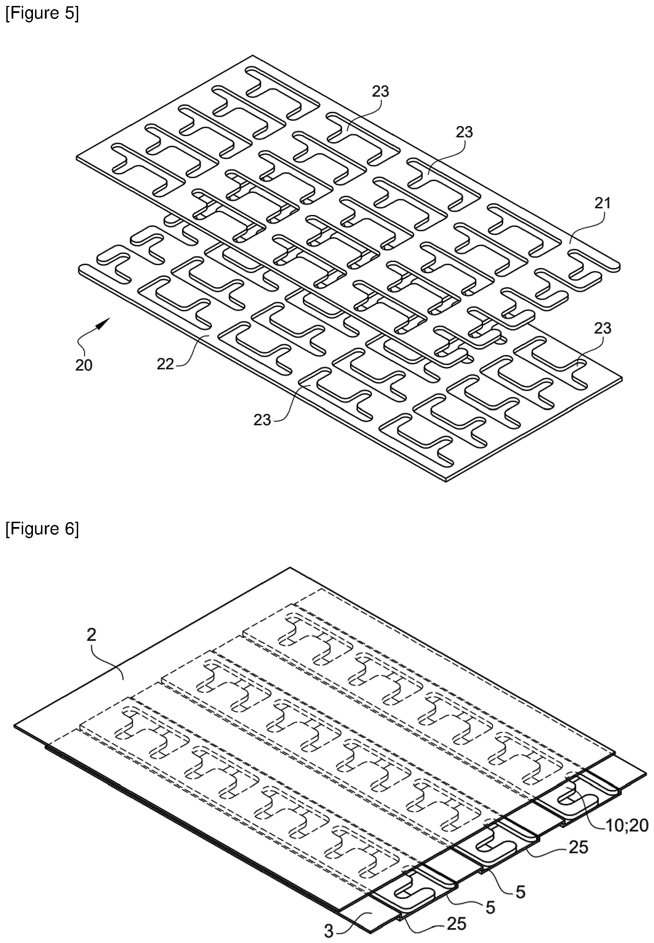

Dans un autre exemple de réalisation illustré sur la figure 5, l'organe de mélange 20 n'est pas monolithique, en une seule pièce, mais comporte deux feuilles 21 et 22 assemblées.

Ces feuilles 21 et 22 sont pourvues d'orifices de circulation 23 qui forment ensemble les ajours 11 de l'organe de mélange 20 définissant des bifurcations et croisements de fluide.

Les deux feuilles 21 et 22 peuvent remplacer l'organe de mélange 10 monolithique précité. Une fois assemblées, ces feuilles 21 et 22 forment les mêmes chemins de fluide que l'organe de mélange 10.

Ces feuilles 21 et 22 sont collées entre elles, en variante, sont soudées entre elles au laser. Ceci est avantageux pour éviter un échauffement des feuilles lorsque celles-ci sont réalisées en un matériau composite à base de plastique chargé avec des éléments de renfort tels que des fibres de verre ou des fibres de carbone.

Dans les exemples décrits plus haut, c'est principalement l'organe de mélange 10 ou 20 qui impose l'orientation des flux de fluide, les plaques supérieure 2 et inférieure 3 jouant principalement le rôle d'enveloppe des canaux 5, sans rôle d'orientation du fluide pour la séparation et la recombinaison des flux.

Dans un autre exemple de réalisation illustré sur la figure 6, la plaque inférieure 3 comprend des sillons 25 formant avec la plaque supérieure 2 qui est plane, les canaux 5 parallèles.

Chaque canal 5 reçoit un organe de mélange 10 ou 20 associé.

Les sillons 25 de la plaque inférieure sont réalisés par emboutissage de la plaque 3.

Dans un autre exemple de mise en œuvre de l'invention, les feuilles 21 et 22 sont à base d'aluminium, notamment étant en alliage d'aluminium, et sont assemblées avec les plaques inférieure 3 et supérieure 2, par brasure sur des bordures.

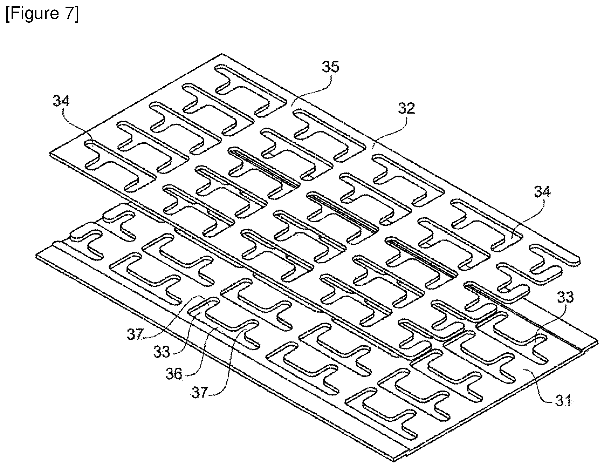

Dans un autre exemple illustré à la figure 7, les canaux 5 sont formés par l'assemblage d'une plaque emboutie 31 et d'un organe de mélange 32, la plaque emboutie 31 comprenant des formes 33 pour définir avec des ajours 34 de l'organe de mélange 32, les canaux 5 et des zones de séparation 51 et de mélange 54 de fluide telles que décrites dans les exemples précédents.

La plaque emboutie 31 est une paroi enveloppe des canaux 5, par exemple qui remplace la plaque inférieure 3 décrite plus haut.

L'organe de mélange 32 comprend une feuille unique 35 avec les ajours 34 de circulation de fluide.

Les ajours 34 de la feuille 35 définissent avec les formes embouties 33 de la plaque 31 des bifurcations et croisements de fluide, comme décrit dans les exemples précédents.

Les formes embouties 33 de la plaque 31 forment des motifs qui se répètent en correspondance avec les ajours 34 de l'organe de mélange 32.

Chaque forme emboutie 33 comprend une branche longitudinale 36 à laquelle se raccordent deux branches transversales 37.

Les formes embouties 33 sont des cuvettes sur la plaque 31.

Cette configuration de branches sur la plaque 31 présente une symétrie miroir et décalé avec la configuration de branches des motifs sur l'organe de mélange 32, pour former les bifurcations et croisements de fluide.

L'organe de mélange 32 peut être à base de matière plastique, de matière composite, de céramique ou de métal.

## Revendications

1. Dispositif de régulation thermique (1), notamment de refroidissement, pour composant (101) susceptible de dégager de la chaleur lors de son fonctionnement, notamment pour un module de stockage d'énergie électrochimique, ce dispositif comportant un réseau de circulation (4) pour un fluide caloporteur, ce réseau comprenant :
- un canal d'écoulement de fluide (5),
- un organe de mélange (10 ; 20 ; 32) comprenant des ajours (11 ; 34) agencés pour provoquer successivement la séparation et le mélange du fluide circulant dans le canal,
le canal (5) et l'organe de mélange (10 ; 20) étant agencés pour définir une zone de séparation (51) agencée pour séparer l'écoulement de fluide en au moins deux flux séparés et, en aval, une zone de mélange (54) dans laquelle les deux flux séparés se mélangent, les deux flux séparés débouchant dans la zone de mélange (54) suivant des angles respectifs choisis de sorte à générer un mélange de couches pariétales de fluide et de couches internes de fluide dans la zone de mélange, notamment l'angle d'incidence entre les deux flux de fluide débouchant dans la zone de mélange étant compris entre 45° et 90°.

2. Dispositif selon la revendication précédente, dans lequel le canal (5) comprend au moins une paroi formée par une plaque (2 ;3) ou un tube, et cette plaque ou ce tube, d'une part, et l'organe de mélange (10 ; 20), d'autre part, sont des pièces distinctes.

3. Dispositif selon la revendication précédente, dans lequel l'organe de mélange (10) est sous la forme d'un organe additionnel placé dans le canal (5).

4. Dispositif selon l'une des revendications 2 à 3, dans lequel la plaque (2 ; 3) ou le tube, et l'organe de mélange (10 ; 20) sont réalisés dans des matériaux différents, notamment l'organe de mélange étant réalisé en matériau plastique ou matériau composite à base de plastique, et la plaque ou le tube est réalisé en métal, par exemple de l'aluminium ou de l'acier.

5. Dispositif selon l'une des revendications précédentes, dans lequel l'organe de mélange (10 ; 20 ; 32) et le canal (5) sont configurés pour générer des flux de fluide qui sont dans au moins deux plans parallèles (P1, P2) distants l'un de l'autre selon une hauteur.

6. Dispositif selon l'une des revendications précédentes, dans lequel l'organe de mélange (10) est une pièce monolithique, agencée pour orienter les flux de fluide.

7. Dispositif selon l'une des revendications 1 à 5, dans lequel l'organe de mélange (20) comporte au moins deux feuilles (21, 22) assemblées, ces feuilles étant pourvues d'orifices de circulation (23) qui forment ensemble les ajours de l'organe de mélange définissant des bifurcations et croisements de fluide.

8. Dispositif selon l'une des revendications précédentes, dans lequel l'organe de mélange, notamment en métal, est placé dans une cuve (17), et cet organe de mélange (10) et cette cuve (17) définissent ensemble les canaux (5) d'écoulement de fluide.

9. Dispositif selon l'une des revendications précédentes, dans lequel les canaux (5) sont formés par l'assemblage d'une plaque emboutie (31) et de l'organe de mélange (32), la plaque emboutie (31) comprenant des formes pour définir avec des formes (33) de l'organe de mélange, les canaux (5) et des zones de séparation et de mélange de fluide.

10. Ensemble (100) comportant un composant susceptible de dégager de la chaleur lors de son fonctionnement, et un dispositif de régulation thermique (1) selon l'une des revendications précédentes, au contact duquel le composant est refroidi.

## Patentansprüche

1. Thermische Regelvorrichtung (1), insbesondere zur Kühlung, für eine Komponente (101), die während ihres Betriebs Wärme abgeben kann, insbesondere für ein elektrochemisches Energiespeichermodul, wobei diese Vorrichtung ein Zirkulationsnetz (4) für ein Wärmeträgerfluid aufweist, wobei dieses Netz umfasst:
- einen Fluidströmungskanal (5),
- ein Mischorgan (10; 20; 32), das Öffnungen (11; 34) umfasst, die angeordnet sind, um nacheinander die Trennung und Mischung des im Kanal zirkulierenden Fluids zu bewirken,
- wobei der Kanal (5) und das Mischorgan (10; 20) angeordnet sind, um einen Trennbereich (51) zu definieren, der angeordnet ist, um die Fluidströmung in mindestens zwei getrennte Ströme zu trennen, und stromabwärts einen Mischbereich (54), in dem sich die beiden getrennten Ströme vermischen, wobei die beiden getrennten Ströme in den Mischbereich (54) unter jeweiligen Winkeln einmünden, die so gewählt sind, dass sie eine Mischung von Wandschichten des Fluids und inneren Fluidschichten im Mischbereich erzeugen, wobei insbesondere der Einfallswinkel zwischen den beiden in den Mischbereich einmündenden Fluidströmen zwischen 45° und 90° liegt.

2. Vorrichtung nach dem vorhergehenden Anspruch, wobei der Kanal (5) mindestens eine Wand aufweist, die durch eine Platte (2; 3) oder ein Rohr gebildet wird, und diese Platte oder dieses Rohr einerseits und das Mischorgan (10; 20) andererseits separate Teile sind.

3. Vorrichtung nach dem vorhergehenden Anspruch, wobei das Mischorgan (10) in Form eines zusätzlichen Organs vorliegt, das im Kanal (5) platziert ist.

4. Vorrichtung nach einem der Ansprüche 2 bis 3, wobei die Platte (2; 3) oder das Rohr und das Mischorgan (10; 20) aus unterschiedlichen Materialien hergestellt sind, wobei insbesondere das Mischorgan aus Kunststoff oder einem Verbundmaterial auf Kunststoffbasis hergestellt ist und die Platte oder das Rohr aus Metall hergestellt ist, beispielsweise aus Aluminium oder Stahl. ANSPRÜCHE

5. Vorrichtung nach einem der vorhergehenden Ansprüche, wobei das Mischorgan (10; 20; 32) und der Kanal (5) konfiguriert sind, um Fluidströme zu erzeugen, die sich in mindestens zwei parallelen Ebenen (P1, P2) befinden, die in einer Höhe voneinander beabstandet sind.

6. Vorrichtung nach einem der vorhergehenden Ansprüche, wobei das Mischorgan (10) ein monolithisches Teil ist, das angeordnet ist, um die Fluidströme zu lenken.

7. Vorrichtung nach einem der Ansprüche 1 bis 5, wobei das Mischorgan (20) mindestens zwei zusammengesetzte Folien (21, 22) aufweist, wobei diese Folien mit Durchflussöffnungen (23) versehen sind, die zusammen die Öffnungen des Mischorgans bilden, die Verzweigungen und Kreuzungen des Fluids definieren.

8. Vorrichtung nach einem der vorhergehenden Ansprüche, wobei das Mischorgan, insbesondere aus Metall, in einem Behälter (17) platziert ist, und dieses Mischorgan (10) und dieser Behälter (17) zusammen die Fluidströmungskanäle (5) definieren.

9. Vorrichtung nach einem der vorhergehenden Ansprüche, wobei die Kanäle (5) durch die Verbindung einer tiefgezogenen Platte (31) und des Mischorgans (32) gebildet werden, wobei die tiefgezogene Platte (31) Formen umfasst, um mit Formen (33) des Mischorgans die Kanäle (5) und Bereiche zur Trennung und Mischung von Fluid zu definieren.

10. Anordnung (100), die eine Komponente umfasst, die während ihres Betriebs Wärme abgeben kann, und eine thermische Regelvorrichtung (1) nach einem der vorhergehenden Ansprüche, durch deren Kontakt die Komponente gekühlt wird.

## Claims

1. Thermal regulation device (1), particularly for cooling, for a component (101) likely to release heat during its operation, particularly for an electrochemical energy storage module, this device comprising a circulation network (4) for a heat transfer fluid, this network comprising:
- a fluid flow channel (5),
- a mixing element (10; 20; 32) comprising openings (11; 34) arranged to successively cause separation and mixing of the fluid circulating in the channel,
- the channel (5) and the mixing element (10; 20) being arranged to define a separation zone (51) arranged to separate the fluid flow into at least two separate flows and, downstream, a mixing zone (54) in which the two separate flows mix, the two separate flows entering the mixing zone (54) at respective angles chosen to generate a mixture of fluid wall layers and fluid internal layers in the mixing zone, particularly the angle of incidence between the two fluid flows entering the mixing zone being between 45° and 90°.

2. Device according to the preceding claim, in which the channel (5) comprises at least one wall formed by a plate (2; 3) or a tube, and this plate or tube, on the one hand, and the mixing element (10; 20), on the other hand, are separate pieces.

3. Device according to the preceding claim, in which the mixing element (10) is in the form of an additional element placed in the channel (5).

4. Device according to one of claims 2 to 3, in which the plate (2; 3) or the tube, and the mixing element (10; 20) are made of different materials, particularly the mixing element being made of plastic material or plastic-based composite material, and the plate or tube is made of metal, for example aluminum or steel.

5. Device according to one of the preceding claims, in which the mixing element (10; 20; 32) and the channel (5) are configured to generate fluid flows that are in at least two parallel planes (P1, P2) distant from each other according to a height.

6. Device according to one of the preceding claims, in which the mixing element (10) is a monolithic piece, arranged to orient the fluid flows.

7. Device according to one of claims 1 to 5, in which the mixing element (20) comprises at least two assembled sheets (21, 22), these sheets being provided with circulation orifices (23) which together form the openings of the mixing element defining bifurcations and crossings of fluid.

8. Device according to one of the preceding claims, in which the mixing element, particularly made of metal, is placed in a tank (17), and this mixing element (10) and this tank (17) together define the fluid flow channels (5).

9. Device according to one of the preceding claims, in which the channels (5) are formed by the assembly of a stamped plate (31) and the mixing element (32), the stamped plate (31) comprising shapes to define, with shapes (33) of the mixing element, the channels (5) and zones for separation and mixing of fluid.

10. Assembly (100) comprising a component likely to release heat during its operation, and a thermal regulation device (1) according to one of the preceding claims, in contact with which the component is cooled.
